# EUROPÄISCHE PATENTSCHRIFT

(11) **EP 1 422 629 B1**
(45) Veröffentlichungstag und Bekanntmachung des Hinweises auf die Patenterteilung: **31.12.2008**
(21) Anmeldenummer: 03023117.9
(22) Anmeldetag: 10.10.2003
(51) Int. Cl.: G06F 15/177, G05B 19/042

(54) **Verfahren zur automatischen Konfiguration einer Parametrieroberfläche von Werkzeugmaschinen oder Produktionsmaschinen**
Method for the automatic configuration of the display of parameters for machine tools or production machines
Procédé pour la configuration automatique de l'affichage de paramètres de machine-outils ou de machines de production

(30) Priorität: 19.11.2002 DE 10254010
(43) Veröffentlichungstag der Anmeldung: 26.05.2004
(73) Patentinhaber: SIEMENS AKTIENGESELLSCHAFT, 80333 München (DE)
(72) Erfinder: Neudeck, Michael, 91056 Erlangen (DE)

(56) Entgegenhaltungen:
- EP-A- 1 225 491
- EP-A2- 0 747 795
- WO-A2-01/90829
- DE-A1- 10 027 006
- US-A- 5 901 323

## Beschreibung

Die Erfindung bezieht sich auf ein Verfahren zur automatischen Konfiguration einer Parametrieroberfläche für mindestens eine Regelung und/oder mindestens eine Steuerung von Werkzeugmaschinen oder Produktionsmaschinen, sowie auf ein Datennetzwerk, zur Verbindung von Maschinenkomponenten bei Werkzeug- oder Produktionsmaschinen.

Werkzeug- und/oder Produktionsmaschinen, wobei unter Produktionsmaschinen auch Roboter zu verstehen sind, werden vom Hersteller häufig in unterschiedlichen Varianten angeboten, die aus einer Grundkonfiguration und optionalen Zusatzkomponenten oder Funktion bestehen. Diese Optionen werden teilweise auch erst nach Auslieferung an den Endkunden nachgerüstet. Nach der mechanischen und elektrischen Installation solcher optionaler Komponenten sind in der Regel Projektierungs- und Inbetriebsetzungsarbeiten an der Regelung und/oder Steuerung der Maschine vorzunehmen.

Eine weitere Problemstellung sind Produktionsmaschinen, auf denen unterschiedliche Produkte hergestellt werden sollen oder mit verschiedenen Rezepturen gearbeitet werden soll. Dort werden häufig verschiedene Maschinenteile in unterschiedlichen Konfigurationen verkettet oder zu einer Grundmaschine optionale Maschinenteile hinzugefügt.

Bisher waren einzelne Maschinenkomponenten immer fest miteinander verkoppelt. Die einzelnen Maschinenkomponenten, wie z.B. Geber oder Motoren, Ein-/Ausgabebaugruppen sowie Leistungssteller waren nicht über Datenleitungen miteinander verbunden, die den Austausch von Parametern, welche die jeweilige Maschinenkomponente beschreiben, erlaubt hätten. Infolge war es bisher einer Regelung oder einer Steuerung der Maschine nicht möglich, die angeschlossene Maschinenkonfiguration bzw. die angeschlossenen Maschinenkomponenten selbständig zu erkennen. Deshalb wurden in den Maschinen bislang nur statische Parametrieroberflächen zur Parametrierung der Maschinenkomponenten insbesondere der Regelung und Steuerung verwendet. Infolge musste praktisch für jede vom Anwender gewünschte Maschinenoption bzw. Maschinenkonfiguration vom Hersteller eine passende Parametrieroberfläche zur Parametrierung der Maschinenkomponenten vorab manuell konfiguriert werden.

Aus der EP 1 225 491 A1 ist ein Verfahren zur Konfiguration der Reglung einer Produktionsmaschine offenbart, wobei ein Benutzer eine gewünschte Konfiguration mittels einer speziell geordneten Liste, die aktuelle und gewünschte Konfigurationswerte für jeden Bearbeitungsschritt zeigt, einstellt.

Der Erfindung liegt daher die Aufgabe zugrunde, ein Verfahren zur automatischen Konfiguration einer Parametrieroberfläche für Regelung und/oder Steuerung von Werkzeugmaschinen oder Produktionsmaschinen anzugeben, bei der eine individuell auf die momentane Maschinentopologie zugeschnittene Parametrieroberfläche generiert wird, sowie ein hierfür geeignetes Datennetzwerk zur Verbindung von Maschinenkomponenten der Maschinen zu schaffen.

Die Aufgabe wird für das erfindungsgemäße Verfahren dadurch gelöst, dass bei Inbetriebnahme der Maschine über ein Datennetzwerk, welches Maschinenkomponenten untereinander verbindet, eine automatische Identifizierung der momentan angeschlossenen Komponenten sowie eine automatische Identifizierung der Struktur des Datennetzwerks durchgeführt wird und solchermaßen eine aktuelle Ist-Maschinentopologie erkannt wird, dass diese mit hinterlegten Soll-Maschinentopologien verglichen wird und falls keine Übereinstimmung mit einer der hinterlegten Sollmaschinentopologien festgestellt wird, anhand der ermittelten Ist-Maschinentopologie eine auf diese zugeschnittene Parametrieroberfläche generiert wird, bei der lediglich die Parameter und/oder Funktionen der erkannten Maschinenkomponenten zur Parametrierung der Regelung und/oder Steuerung der Maschine dem Bediener angezeigt werden.

Für ein Datennetzwerk zur Verbindung von Maschinenkomponenten bei Werkzeug- oder Produktionsmaschinen wird die oben genannte Aufgabe erfindungsgemäß dadurch gelöst, dass die Maschinenkomponenten über einheitliche Datenschnittstellen zum Austausch von Daten verbindbar sind, wobei die Datenschnittstellen als physikalische Punkt zu Punkt-Verbindungen ausführbar sind, wobei die Maschinenkomponenten jeweils eine eigene Intelligenz, insbesondere einen Controller und eine eigene ID-Nummer, besitzen.

Eine erste vorteilhafte Ausbildung des erfindungsgemäßen Verfahrens ist dadurch gekennzeichnet, dass nach erfolgter automatischer Erkennung der Ist-Maschinentopologie und Vergleich mit hinterlegten Soll-Maschinentopologien eine Bestätigung der erkannten Ist-Maschinentopologie durch den Bediener erfolgt, bevor das erfindungsgemäße Verfahren fortgesetzt wird. Eine eventuell falsch erkannte Ist-Maschinentopologie kann hierdurch schon sehr frühzeitig vom Anwender erkannt werden.

Eine weitere vorteilhafte Ausbildung des erfindungsgemäßen Verfahrens ist dadurch gekennzeichnet, dass die automatische Identifizierung der momentan angeschlossenen Maschinenkomponenten mittels einer ID-Nummer, welche jede angeschlossene Maschinenkomponente kennzeichnet, durchgeführt wird. Hierdurch ist eine sehr sichere und eindeutige Identifizierung der angeschlossenen Maschinenkomponente gewährleistet.

In diesem Zusammenhang erweist es sich als vorteilhaft, dass die ID-Nummer die Daten der jeweiligen Maschinenkomponente, insbesondere die Seriennummer und/oder Bestellnummer und/oder Softwarestand und/oder Ausführungstyp und/oder Herstellerbezeichnung und/oder Hersteller und/oder Leistungsdaten, beinhaltet. Eine möglichst umfassende Beschreibung der Maschinenkomponente, mittels einer entsprechenden ID-Nummer, erlaubt eine eindeutige und zuverlässige Identifizierung der Maschinenkomponente.

Eine weitere vorteilhafte Ausführung der Erfindung ist dadurch gekennzeichnet, dass die einheitlichen Datenschnittstellen physikalisch als Ethernet-, Firewire- oder USB-Schnittstellen realisierbar sind. Mit Hilfe der genannten Datenschnittstellen ist ein besonders einfacher Aufbau des Datennetzwerks möglich.

Eine weitere vorteilhafte Ausführung der Erfindung ist dadurch gekennzeichnet, dass die ID-Nummer, die Seriennummer und/oder Bestellnummer und/oder Softwarestand und/oder Ausführungstyp und/oder Herstellerbezeichnung und/oder Hersteller und/oder Leistungsdaten beinhaltet. Eine möglichst umfassende Beschreibung der Maschinenkomponente, mittels einer entsprechenden ID-Nummer, erlaubt eine eindeutige und zuverlässige Identifizierung der Maschinenkomponente.

Eine weitere vorteilhafte Ausführung der Erfindung ist dadurch gekennzeichnet, dass als Maschinenkomponenten, mindestens ein Leistungssteller und/oder mindestens ein Motor und/oder mindestens ein Sensor und/oder mindestens ein Geber und/oder mindestens eine Ein-/Ausgabebaugruppe und/oder mindestens eine Regelung und/oder mindestens eine Steuerung vorgesehen sind. Leistungssteller, Motoren, Sensoren, Geber und Ein-/Ausgabebaugruppen stellen gängige Maschinenkomponenten dar.

Ein Ausführungsbeispiel der Erfindung ist in der Zeichnung dargestellt und wird im folgenden näher erläutert. Dabei zeigen:
- FIG 1: ein Blockschaltbild einer Maschine inklusive Datennetzwerk
- FIG 2: ein Ablaufdiagramm des erfindungsgemäßen Verfahrens.

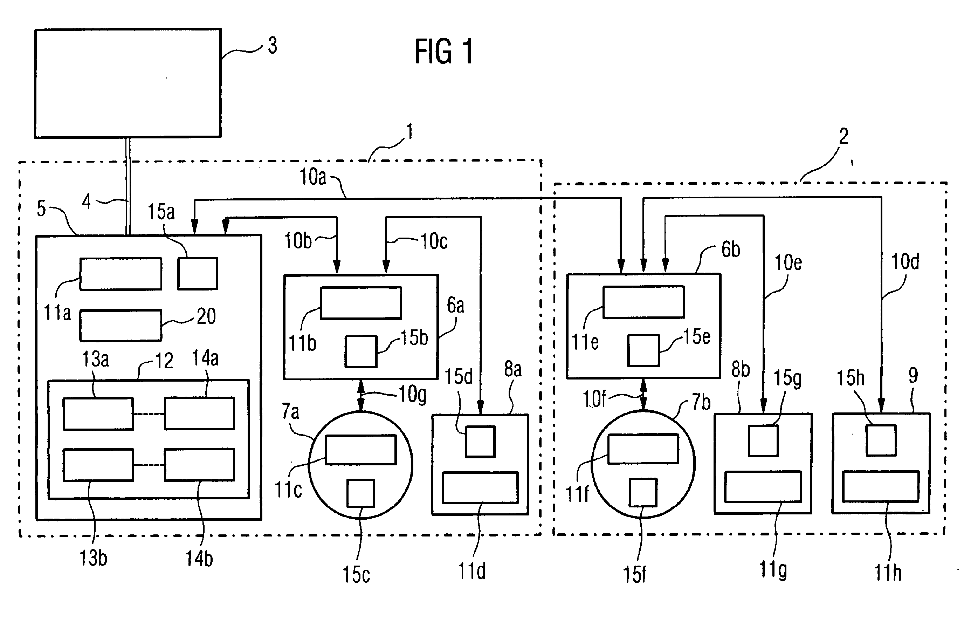

In dem Blockschaltbild gemäß FIG 1 wird im wesentlichen eine Maschine dargestellt, welche aus einer Grundmaschine 1 und einem optionalen Maschinenteil 2 besteht. In dem Ausführungsbeispiel wird z.B. zur Fertigung eines Produktes A die Maschine nur in ihrer Form als Grundmaschine 1 benötigt, während z.B. zur Fertigung eines zweiten Produktes B zusätzlich ein optionaler Maschinenanteil 2 zur Grundmaschine 1 dazugeschalten werden muss. In dem Ausführungsbeispiel besteht die Grundmaschine 1 aus den Maschinenkomponenten Regelung 5, Leistungssteller 6a, Motor 7a und einem Geber 8a. Der optionale Maschinenanteil 2 setzt sich beispielhaft aus einem Leistungssteller 6b, einen Motor 7b, einem Geber 8b, sowie einer Ein-/Ausgabebaugruppe 9 zusammen. Die einzelnen Maschinenkomponenten sind über ein Datennetzwerk, welches im wesentlichen aus dem physikalischen Punkt-zu-Punkt-Verbindungen 10a, 10b, 10c, 10d, 10e, 10f und 10g besteht, miteinander verbunden. Im dem Ausführungsbeispiel sind die Schnittstellen der einzelnen Maschinenkomponenten physikalisch als Ethernet-Schnittstellen realisiert. Es sind aber auch alternativ als physikalische Schnittstellen Firewire- oder USB-Schnittstellen (Universal Serial Bus Schnittstellen) denkbar.

Jede in den Ausführungsbeispielen dargestellte Maschinenkomponente verfügt über eine eigene Intelligenz 15a, 15b, 15c, 15d, 15e, 15f, 15g und 15h, beispielsweise in Form eines Controllers. Weiterhin besitzt jede Maschinenkomponente zur eindeutigen Identifikation eine eigene ID-Nummer 11a, 11b, 11c, 11d, 11e, 11f, 11g sowie 11h. Eine übergeordnete Automatisierungsebene 3, welche nicht zur Maschine gehört ist über einen Feldbus 4 mit der Grundmaschine 1 bzw. der Regelung 5 verbunden.

Die Regelung 5 besitzt ein Speichermedium 12, welches vorzugsweise als nichtflüchtiges Speichermedium 12 realisiert ist. Im Speichermedium 12 ist im Ausführungsbeispiel eine erste Soll-Maschinentopologie 13a, eine zweite Soll-Maschinentopologie 13b, eine erste Parametrieroberflächendatei 14a und eine zweite Parametrieroberflächendatei 14b hinterlegt.

Jede Soll-Maschinentopologie ist eine Parametrieroberflächendatei zugeordnet, was jeweils durch eine gestrichelt gezeichnete Verbindung in FIG 1 angedeutet ist. Jede Parametrieroberflächendatei enthält die auf die jeweilige Soll-Maschinentopologie zugehörigen Parameter zur Konfiguration der Parametrieroberfläche. Als Beispiel für einen einzelnen Parameter innerhalb einer solchen Parametrieroberflächendatei wäre z.B. ein Verstärkungsfaktor eines Antriebsregelkreises zu nennen.

In dem Ausführungsbeispiel ist der Grundmaschine 1 eine erste Soll-Maschinentopologie 13a und eine erste Parametrieroberflächendatei 14a zugeordnet. Besteht die Maschine aus der Grundmaschine 1 und dem optionalen Maschinenanteil 2, d.h., ist der optionale Maschinenanteil 2 angeschlossen, so ist der Maschine die zweite Soll-Maschinentopologie 13b und eine zweite Parametrieroberflächendatei 14b zugeordnet. Die einzelnen Soll-Maschinentopologien bzw. zugehörigen Parametrieroberflächendateien werden vom Hersteller oder vom entsprechenden Fachpersonal bei der Inbetriebnahme der Maschine mit dem erfindungsgemäßen Verfahren erstellt und im Speichermedium 12 hinterlegt.

Selbstverständlich kann anstatt oder zusätzlich zur Regelung 5 auch eine Steuerung mit einem entsprechenden Speichermedium und den entsprechenden Soll-Maschinentopologien bzw. Parametrieroberflächendateien oder mehrere solcher Regelungen und/oder Steuerungen in der Maschine vorhanden sein. Weiterhin kann die Maschine auch aus wesentlich mehr optionalen Maschinenteilen bzw. Maschinenkomponenten bestehen. Auch können gegebenenfalls noch andere Arten von Maschinenkomponenten vorhanden sein.

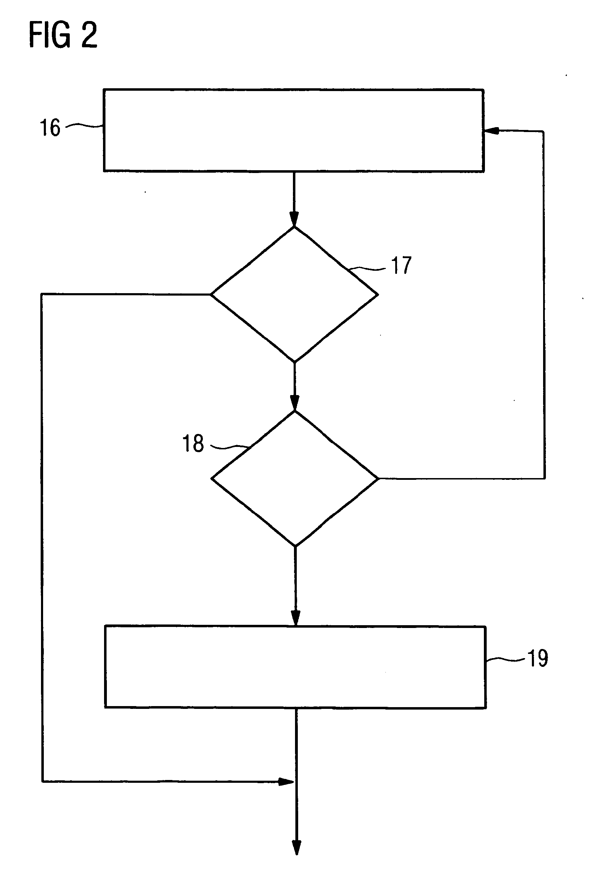

In FIG 2 ist ein Ausführungsbeispiel des erfindungsgemäßen Verfahrens als Ablaufdiagramm dargestellt.

Zu Beginn der automatischen Konfiguration der im Ausführungsbeispiel angegebenen Regelung 5 wird innerhalb des Funktionsblocks 16, beim Hochlaufen der Maschine über das Datennetzwerk eine automatische Identifizierung der momentan angeschlossenen Maschinenkomponenten, sowie eine automatische Identifizierung der Struktur des Datennetzwerks, d.h. es wird ermittelt wie im Datennetzwerk die Maschinenkomponenten untereinander verbunden sind, durchgeführt und solchermaßen eine aktuelle Ist-Maschinentopologie 20 erkannt. Die erkannte Ist-Maschinentopologie 20 beinhaltet somit sowohl Informationen über die Struktur des Datennetzwerks als auch eine Identifizierung der angeschlossenen Maschinenkomponenten. Die Identifizierung der Maschinenkomponenten kann dabei Daten wie z.B. die Seriennummer und/oder Bestellnummer und/oder Softwarestand und/oder Ausführungstyp und/oder Herstellerbezeichnung und/oder Hersteller und/oder Leistungsdaten beinhalten. In einer vorteilhaften Ausführungsform sind diese Daten in Form einer ID-Nummer zusammengefasst, wobei unter Umständen, falls nicht alle für das erfindungsgemäße Verfahren benötigten Daten der Maschinenkomponenten in der ID-Nummer selbst integiert sind, die betreffenden Maschinendaten über das Datennetzwerk von der Regelung und/oder Steuerung, nachgeladen werden müssen.

Nach Ablauf der Topologieerkennung 16 wird innerhalb eines Entscheidungsblocks 17 ein Vergleich der aktuell ermittelten Ist-Maschinentopologie mit schon vorher abgespeicherten Soll-Maschinentopologien durchgeführt. Die entsprechenden Soll-Maschinentopologien, sowie die zugehörigen Parametrieroberflächendaten, wurden entweder schon vom Hersteller hinterlegt oder sind innerhalb frühere Inbetriebnahmen der Maschine durch das erfindungsgemäße Verfahren bereits angelegt worden. Ergibt der Vergleich, dass zu der aktuell erkannten Ist-Maschinentopologie bereits eine identische Soll-Maschinentopologie existiert, werden die Funktionsblöcke 18 und 19 übersprungen und dem Anwender anhand der zur Soll-Maschinentopologie zugehörigen Parametrieroberflächendatei eine zu der entsprechenden Soll-Maschinentopologie zugehörige Parametrieroberfläche zur Verfügung gestellt.

In dem Ausführungsbeispiel gemäß FIG 1 würde z.B. unter der Vorraussetzung, dass die Maschine als Grundmaschine 1 ohne optionalen Maschineanteil 2 konfiguriert ist und infolge einer zu einem frühren Zeitpunkt durchgeführte Inbetriebnahme der Maschine mit der selben Konfiguration, bereits eine zugehörige erste Soll-Maschinentopologie 13a und zugehörige erste Parametrieroberflächendatei 13b existiert, keine neue Parametrieroberfläche mehr generiert werden, sondern dem Bediener, eine Parametrieroberfläche anhand bzw. entsprechend der schon existierenden ersten Parametrieroberflächendatei 13a zu Verfügung gestellt werden.

Falls innerhalb des Entscheidungsblock 17 festgestellt wird, dass die erkannte Ist-Maschinentopologie mit keinen der abgespeicherten Soll-Maschinentopologien übereinstimmt wird zum Entscheidungsblock 18 verzweigt.

Im Entscheidungsblock 18 wird die automatisch erkannte Ist-Maschinentopologie nach Überprüfung bzw. Bestätigung durch den Anwender für das weitere Verfahren übernommen. Falls die Überprüfung ergibt, dass die automatisch erkannte Ist-Maschinentopologie fehlerhaft ist, dann kann entweder das erfindungsgemäße Verfahren, wie in FIG 2 gezeichnet, nach einer Überprüfung der Maschine wiederholt werden oder es können einzelne Parameter per Hand korrigiert werden. Entscheidungsblock 18 ist hierbei lediglich, im Rahmen einer vorteilhaften Ausführungsform, optional zu sehen. Gegebenenfalls kann der Entscheidungsblock 18 auch entfallen und gleich von dem Entscheidungsblock 17 zum Funktionsblock 19 gesprungen werden oder es kann der Entscheidungsblock 18 vor dem Funktionsblock 17 ausgeführt werden.

Im Funktionsblock 19 erfolgt die Generierung der Parametrieroberfläche. Anhand der ermittelten Ist-Maschinentopologie wird eine auf diese zugeschnittene Parametrieroberfläche generiert, bei der lediglich die Parameter und Funktionen der erkannten Maschinenkomponenten zur Parametrierung der Regelung und/oder Steuerung der Maschine dem Bediener angezeigt werden. Wenn z.B. ein neuer Antrieb bestehend aus einem Leistungsstellermotor und Drehzahlgeber erkannt wird, so werden z.B. die zugehörigen Softwarepakete in der Regelung aktiviert und deren Einstellparameter generiert und gegebenenfalls auch herstellerseitig voreingestellt. Am Ende der automatischen Konfiguration der Parametrieroberfläche stehen dann dem Anwender alle Parameter und Funktionen zur Verfügung, die er für die momentane Maschinenkonfiguration bzw. die momentane Ist-Maschinentopologie benötigt. Nach erfolgter Parametrierung bzw. Bestätigung der gegebenenfalls voreingestellten Parameter wird die Ist-Maschinenkonfiguration als Soll-Maschinenkonfiguration mit der dazugehörigen Parametrieroberflächendatei im Speichermedium 12 abgelegt.

In dem Ausführungsbeispiel gemäß FIG 1 würde z.B. unter der Vorraussetzung, dass die Maschine, als Grundmaschine 1, die zusammengeschaltet mit dem optionalen Maschineanteil 2 konfiguriert ist und keine zu dieser Ist-Maschinenkonfiguration zugehörige zweite Soll-Maschinentopologie 13b existiert, eine auf die Ist-Maschinentopologie zugeschnittene Parametrieroberfläche vom erfindungsgemäßen Verfahren generiert werden und die erkannte Ist-Maschinentopologie als zweite Soll-Maschinentopologie 13b zusammen mit der zugehörigen zweiten Parametrieroberflächendatei 14b im Speichermedium 12 gespeichert werden.

In manchen Anwendungsfällen kann es auch vorkommen, dass bestimmte Maschinenkomponenten, wie z.B. ein Motor über noch keine eigene Intelligenz (Controller) oder keinen Anschluss an das Datennetzwerk besitzen. In solchen Fällen lässt sich in der Regel trotzdem eine Ist-Maschinentopologie bestimmen, in dem z.B. herstellerseitig davon ausgegangen werden kann, dass jedem Leistungssteller genau ein bestimmter Motortyp nachgeschaltet ist, weil z.B. der betreffende Motortyp vom Hersteller immer für den erkannten Leistungssteller verwendet wird. Zur Durchführung des Verfahrens ist es also nicht zwangsweise notwendig, dass sämtliche Maschinenkomponenten mit einer eigenen Intelligenz bzw. eigenen ID-Nummer und einem Anschluss an das Datennetzwerk ausgestattet sind.

Die aktuelle Ist-Maschinentopologie, sowie zusätzliche Daten, wie z.B. der Zeitpunkt der Aktivierung der Ist-Maschinentopologie, die Zeitdauer der Benutzung der Ist-Maschinentopologie können gemäß FIG 1 über einen Feldbus 4 an eine übergeordnete Automatisierungsebene 3 weitergeleitet werden. Sofern die Maschine und/oder die übergeordnete Automatisierungsebene 3 mit einem entsprechenden nicht in FIG 1 dargestellten Kommunikationsmittel verbunden ist, z.B. Telefonnetz und/oder Internet/Intranet, kann die aktuelle Ist-Maschinentopologie z.B. vom Maschinenhersteller erfasst und überwacht werden.

Es sei an dieser Stelle angemerkt, dass für die oben genannten physikalischen Datenschnittstellen (Ethernet-, Firewire oder USB-Schnittstellen) unter Umständen nicht die Originalprotokolle dieser Schnittstellen verwendet werden können, da bei einigen Maschinen harte Anforderungen an die Echtzeitfähigkeit der zu übertragenden Daten gestellt werden. Deshalb müssen für einige Anwendungsfälle, die entsprechenden zu den physikalischen Schnittstellen gehörenden Protokolle in Richtung Echtzeitfähigkeit modifiziert werden.

Weiterhin ist es sinnvoll, dass die ID-Nummer zur Identifikation der Maschinenkomponente diese möglichst umfassend beschreibt. So kann die ID-Nummer beispielsweise Seriennummer, Bestellnummer, Softwarestand, Leistungsdaten und/oder Ausführungstyp bzw. Herstellerbezeichnung und/oder den Hersteller beinhalten.

## Patentansprüche

1. Verfahren zur automatischen Konfiguration einer Parametrieroberfläche für mindestens eine Regelung und/oder mindestens eine Steuerung von Werkzeugmaschinen oder Produktionsmaschinen, **dadurch gekennzeichnet, dass** bei Inbetriebnahme der Maschine über ein Datennetzwerk, welches Maschinenkomponenten (5, 6a, 6b, 7a, 7b, 8a, 8b, 9) untereinander verbindet, eine automatische Identifizierung der momentan angeschlossen Maschinenkomponenten (5,6a,6b,7a,7b,8a, 8b,9) sowie eine automatische Identifizierung der Struktur des Datennetzwerks durchgeführt wird und solchermaßen eine aktuelle Ist-Maschinentopologie (20) erkannt wird, dass diese mit hinterlegten Soll-Maschinentopologien (13a, 13b) verglichen wird und falls keine Übereinstimmung mit einer der hinterlegten Soll-Maschinentopologien (13a, 13b) festgestellt wird, anhand der ermittelten Ist-Maschinentopologie (20) eine auf diese zugeschnittene Parametrieroberfläche generiert wird, bei der lediglich die Parameter und/oder Funktionen der erkannten Maschinenkomponenten zur Parametrierung der Regelung und/oder Steuerung der Maschine dem Bediener angezeigt werden.

2. Verfahren nach Anspruch 1, **dadurch gekennzeichnet, dass** nach erfolgter automatischer Erkennung der Ist-Maschinentopologie (20) und Vergleich mit hinterlegten Soll-Maschinentopologien (13a, 13b), eine Bestätigung der erkannten Ist-Maschinentopologie durch den Bediener erfolgt, bevor das erfindungsgemäße Verfahren fortgesetzt wird.

3. Verfahren nach einem der vorhergehenden Ansprüche, **dadurch gekennzeichnet, dass** die Parameter der erkannten Maschinenkomponenten (5,6a,6b,7a,7b,8a, 8b,9) automatisch mit Werten vorbelegt werden, welche anschließend mit Hilfe der Parametrieroberfläche vom Bediener verändert werden können.

4. Verfahren nach einem der vorhergehenden Ansprüche, **dadurch gekennzeichnet, dass** die automatische Identifizierung, der momentan angeschlossen Maschinenkomponenten (5,6a,6b,7a,7b,8a,8b,9) mittels einer ID-Nummer (11a,11b,11c,11d,11e,11f,11g,11h), welche jede angeschlossene Maschinenkomponente (5,6a,6b,7a,7b,8a,8b,9), kennzeichnet, durchgeführt wird.

5. Verfahren nach Anspruch 4, **dadurch gekennzeichnet, dass** die ID-Nummer (11a,11b,11c,11d,11e, 11f,11g,11h) die Daten der jeweiligen Maschinenkomponente (5,6a,6b,7a,7b,8a,8b,9), insbesondere die Seriennummer und/oder Bestellnummer und/oder Softwarestand und/oder Ausführungstyp und/oder Herstellerbezeichnung und/oder Hersteller und/oder Leistungsdaten, beinhaltet.

## Claims

1. Method for automatically configuring a parameterizing interface for at least one closed-loop control and/or at least one open-loop control of machine tools or production machines, **characterized in that**, when the machine is commissioned via a data network which interconnects the machine components (5, 6a, 6b, 7a, 7b, 8a, 8b, 9), an automatic identification of the currently connected machine components (5, 6a, 6b, 7a, 7b, 8a, 8b, 9) as well as an automatic identification of the structure of the data network is undertaken and in such a way a current actual machine topology (20) is identified, that this is compared with stored desired machine topologies (13a, 13b) and if it is determined that there is no match with one of the stored desired machine topologies (13a, 13b), a dedicated parameterizing interface is generated on the basis of the determined machine topology (20), with which only the parameters and/or functions of the identified machine components for parameterizing the closed-loop control and/or open-loop control of the machine are indicated to the user.

2. Method according to claim 1, **characterised in that** after automatically identifying the actual machine topology (20) and comparing it with stored desired machine topologies (13a, 13b), a confirmation of the identified actual machine topology by the operator takes place before the method according to the invention is continued.

3. Method according to one of the preceding claims, **characterized in that** the parameters of the identified machine components (5, 6a, 6b, 7a, 7b, 8a, 8b, 9) are automatically preassigned values which can be subsequently changed by the user with the aid of the parameterizing interface.

4. Method according to one of the preceding claims, **characterized in that** the automatic identification of the currently connected machine components (5, 6a, 6b, 7a, 7b, 8a, 8b, 9) is undertaken by means of an ID number (11a, 11b, 11c, 11d, 11e, 11f, 11g, 11h), which characterizes each connected machine component (5, 6a, 6b, 7a, 7b, 8a, 8b, 9).

5. Method according to claim 4, **characterized in that** the ID number (11a, 11b, 11c, 11d, 11e, 11f, 11g, 11h) contains the data of the respective machine components (5, 6a, 6b, 7a, 7b, 8a, 8b, 9), in particular the serial number and/or order number and/or software status and/or version type and/or manufacturers designation and/or manufacturer and/or performance data.

## Revendications

1. Procédé de configuration automatique d'une surface paramétrée pour au moins une régulation et/ou au moins une commande de machine-outil ou de machine de production, **caractérisé en ce que**, lors de la mise en fonctionnement de la machine, on effectue, par un réseau de données, qui relie entre eux des éléments ( 5, 6a, 6b, 7a, 7b, 8a, 8b, 9 ) de machine, une identification automatique des éléments ( 5, 6a, 6b, 7a, 7b, 8a, 8b, 9 ) de machine raccordés dans l'instant, ainsi qu'une identification automatique de la structure du réseau de données, et on détecte dans cette mesure une topologie ( 20 ) de machine réelle instantanée, **en ce que** l'on compare celle-ci à des topologies ( 13a, 13b ) de machine de consigne mémorisées et, si on constate qu'il n'y a pas de coïncidence avec l'une des topologies ( 13a, 13b ) de machine de consigne mémorisées, on produit au moyen de la topologie ( 20 ) de machine réelle déterminée une surface paramétrée adaptée à celle-ci, dans laquelle seulement les paramètres et/ou les fonctions des éléments de machine détectés sont indiqués à l'opérateur pour la paramétrisation de la régulation et/ou de la commande de la machine.

2. Procédé suivant la revendication 1, **caractérisé en ce qu'**après avoir effectué une détection automatique de la topologie ( 20 ) de machine réelle et après avoir comparé à des topologies ( 13a, 13b ) de machine de consigne mémorisées, une confirmation de la topologie de machine réelle détectée est effectuée par l'opérateur avant de poursuivre le procédé

3. Procédé suivant l'une des revendications précédentes, **caractérisé en ce que** l'on apprête à l'avance les paramètres des éléments ( 5, 6a, 6b, 7a, 7b, 8a, 8b, 9 ) de machine détectés automatiquement à des valeurs qui peuvent être modifiées ensuite par l'opérateur à l'aide de la surface paramétrée.

4. Procédé suivant l'une des revendications précédentes, **caractérisé en ce que** l'on effectue l'identification automatique des éléments ( 5, 6a, 6b, 7a, 7b, 8a, 8b, 9 ) de machine raccordés dans l'instant au moyen d'un numéro ( 11a, 11b, 11c, 11d, 11e, 11f, 11g, 11h ) d'identification, qui caractérise chaque élément ( 5, 6a, 6b, 7a, 7b, 8a, 8b, 9 ) de machine raccordé.

5. Procédé suivant la revendication 4, **caractérisé en ce que** les numéros ( 11a, 11b, 11c, 11d, 11e, 11f, 11g, 11h ) d'identification comportent les données des éléments ( 5, 6a, 6b, 7a, 7b, 8a, 8b, 9 ) respectifs de la machine, notamment les numéros de série et/ou les numéros de commande et/ou l'état logiciel et/ou le type de réalisation et/ou la désignation du fabricant et/ou le fabricant et/ou des données de capacité.
